# EUROPEAN PATENT APPLICATION

(11) **EP 2 819 476 A1**
(43) Date of publication of application: **31.12.2014**
(21) Application number: 13305901.4
(22) Date of filing: 27.06.2013
(51) Int. Cl.: H04W 72/12, H04L 5/00

(54) **Resource allocation with low signalling overhead**

(71) Applicant: ALCATEL LUCENT, 92100 Boulogne-Billancourt (FR)
(72) Inventor: Braun, Volker, 70435 Stuttgart (DE); CESAR, Bozo, 70435 Stuttgart (DE)
(74) Representative: Wetzel, Emmanuelle

(57) **Abstract**

A method and system consisting of at least one base station and one user equipment device for resource allocation with low signaling overhead is proposed. Allocation of radio resources in a multi-carrier transmission system comprises a step of preallocating at least one of multiple shared channels. Further, a group of at least one user equipment device is assigned to a preallocated shared channel. Further, dynamic scheduling is employed for allocating radio resources from the at least one preallocated shared channel to a user equipment device of the group of user equipment devices for data transmission from and to a base station.

## Description

### FIELD OF THE INVENTION

The present invention relates to a resource allocation for data transmission between a base station and user equipment devices, and to the base station and user equipment device related hereto.

### BACKGROUND OF THE INVENTION

This section introduces aspects that may be helpful in facilitating a better understanding of the invention. Accordingly, the statements of this section are to be read in this light and are not to be understood as admission about what is in the prior art.

Machine to machine communication (MMC) is expected to create a large amount of traffic volume in future wireless networks, in particular involving small payload packets. An issue with small payload packets in current wireless broadband systems, e.g. such as LTE, is that the signaling overhead is large compared to the payload, thus making the transmission of small payload packets very inefficient.

Further wireless broadband systems will demand efficient MMC techniques. The MMC devices are typically low-cost devices and their functionality may be reduced compared to a conventional user equipment (smart phone, tablet, etc.). Also, there is a need to minimize the power consumption by adequate design of the air interface.

MMC devices communicate via a multi-carrier transmission system, e.g. OFDM, SC-FDMA, FBMC or the like with resource allocation in transmission time intervals and frequency resources, e.g. physical resource blocks in LTE, or a subset or bundle thereof. Low-cost MMC devices may use only part of the available band, e.g. the inner xMHz band of the LTE frequency band. The scheduling of the resources may be with or without contention. Fully dynamic scheduling is often realized.

In LTE this involves a fully dynamic assignment of radio resources by means of L1/L2 control signaling, i.e. uplink (UL) or downlink (DL) scheduling grants (DCIs) on PDCCH. This method creates a large signaling overhead and causes significant battery consumption in the MMC device for the blind searches.

The conventional solution has two stages:

In a first stage, the receiver decodes the L1/L2 control information, using a first set of pilot symbols (typically involving non-precoded pilot symbols), and performs a user-specific CRC. If CRC is passed, the receiver continues with the second stage.

In a second stage, the receiver performs the data detection and decoding using the parameters extracted from the L1/L2 control channel, aided by channel estimation using a second set of pilot symbols (possibly involving precoded pilot symbols).

With conventional solutions the L1/L2 control signaling involving user-specific CRC and the actual data transmission use a disjunct set of radio resources:

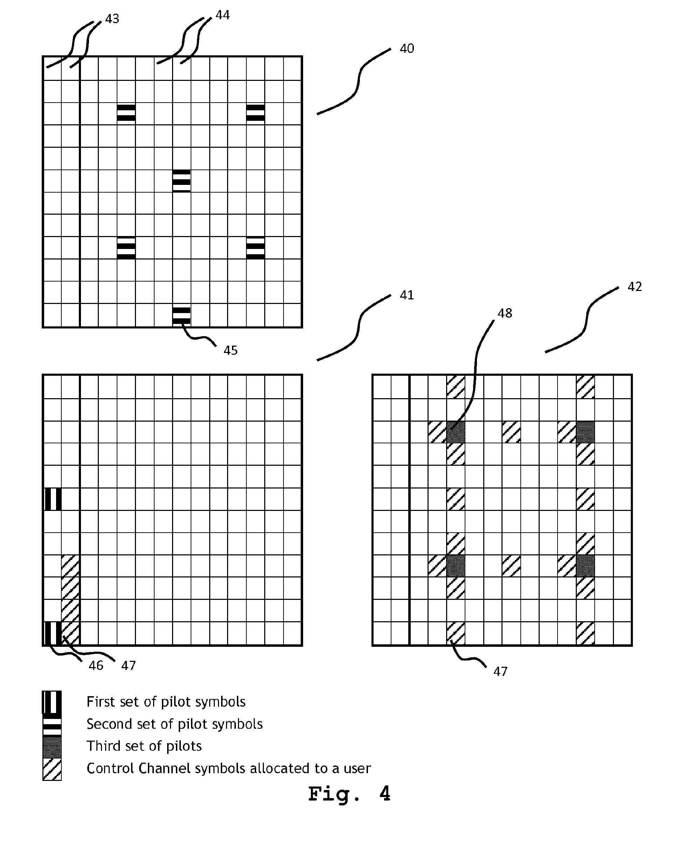

In LTE Release 8, the control signaling on PDCCH is separated from the data by means of TDM (see Fig. 4 left hand side).

In LTE Release 10, the control signaling on ePDCCH is separated from the data by means of FDM.

This implies that the first set of pilot symbols can in general not be used for aiding the decoding of the actual data, since the radio resources for control and data are too far apart from each other.

### SUMMARY OF THE INVENTION

It is an object of the invention to reduce signaling overhead for establishing a communication link between a base station and a user equipment device in a machine to machine communication scenario.

According to one embodiment, a method for allocating radio resources in a multi-carrier transmission system is proposed. In one step, at least one shared channel out of multiple shared channels is preallocated. The channel is e.g. preallocated to machine to machine communication. The preallocation may be permanently or on a semi-static basis. Semi-static preallocation means that the preallocation of channels is done when setting up the network and may be changed from time to time, but can be considered constant during the time needed for a machine to machine communication device to transmit its data. Further, a group of at least one user equipment device is assigned to a preallocated shared channel. In another step, radio resources from the at least one preallocated shared channel assigned to the group of user equipment devices are assigned by dynamic scheduling to a user equipment device of the group of at least one user equipment device for data transmission between a base station and the user equipment device. In general, more than one group of at least one user equipment device is created, wherein the user equipment devices in one group are related to each other by at least one shared characteristic or parameter. This has the advantage to reduce overhead beforehand of each data transmission. This advantage is realized by the preallocation of a shared channel and assigning the group of user equipment devices to the respective shared channel. Signaling overhead is drastically reduced even if in some embodiments signaling overhead is needed for preallocation of the shared channel and assigning a group of at least one user equipment device to a shared channel. After the assignment is done, this group of at least one user equipment device is set up to use the at least one preallocated shared channel as a radio resource. If one user equipment device within a group of at least one user equipment device has data to transmit, the radio resource of this preallocated shared channel is allocated to the device prepared to transmit data by dynamic scheduling. Thus, as this at least one shared channel is preallocated and already assigned to the group of at least one user equipment device, dynamic scheduling addresses only this at least one shared channel in correspondence with the group of at least one user equipment device. As this is a subset of the whole transmission system, the dynamic scheduling is only done with regard to this subset of the system and is thus drastically simplified. As a consequence, the signaling overhead is reduced significantly. This optimizes the relation between overhead and data in the transmission system, especially in case of machine to machine communication with low payloads.

In one embodiment, the preallocation of shared channels is realized by user specific Radio Resource Control (RRC) signaling. This allows a flexible preallocation and thus enables a flexible transmission system.

In one embodiment, the user equipment devices belonging to a group of at least one user equipment device are defined by information of an identifier of the user equipment device. As an example, a Radio Network Temporary Identifier (RNTI) is used for defining a group of at least one user equipment device. Using an identifier of the user equipment devices for grouping the user equipment devices has the advantage that the identifiers are known anyway, and thus no additional information has to be requested and is needed to build the groups of user equipment devices. As this information is available at the user equipment devices anyway, they can group their selves without additional overhead.

In one embodiment, the definition of groups of user equipment devices depends on quality of service (QoS) requirements of the respective devices. This has the effect that user equipment devices having the same or similar quality of service requirements are grouped. As a consequence, at least one shared channel is assigned to a group of at least one user equipment device having the same or similar quality of service requirements. Thus, the dynamic scheduling and the parameters for data transmission may be adapted in a way to meet this quality of service requirements best while at the same time ensuring efficient use of the radio resources. In one embodiment, different shared channels are available for different quality of service requirements. The user equipment devices are assigned to the appropriate shared channel by being grouped according to their quality of service requirements. A user equipment device may assign itself to a group of at least one user equipment device according to his quality of service requirements. If a user equipment device is e.g. a temperature, light or other sensor, the device itself is aware of its quality of service requirements needed for submitting and/or receiving sensor data. If a user equipment device is e.g. a phone, the device itself is aware of the quality of service requirements for transmitting and/or receiving voice data. Thus the devices are able to group themselves independently.

In one embodiment, preallocation of at least one of multiple shared channels depends on system bandwidth, frame format, subframe format, prefix format and/or network load. Thus, related requirements with regard to data transmission of the user equipment devices are the basis for assigning user equipment devices to the respective preallocated shared channels and building the groups of user equipment devices.

In one embodiment, the information for preallocation of at least one shared channel is broadcast. This may be done when initializing the system or on a regular basis.

In one embodiment, the multi-carrier system is an OFDM, SC-FDMA or FBMC system with resource allocation in transmission time intervals and frequency resources. These systems are examples of systems providing shared channels to which a group of at least one user equipment device may be assigned. Within one shared channel, different user equipment devices may have access to radio resources according to a dynamic scheduling algorithm or the like.

In one embodiment, in case the preallocated shared channels are not fully occupied by the transmissions of the machine to machine communication devices, the shared channel may in addition be dynamically allocated to broadband or other applications by the dynamic scheduling algorithm and thus carry data which do not originate from machine to machine communication services. This improves the spectral efficiency on the air interface, especially when the machine to machine communication traffic does not fully occupy the preallocated shared channels. The system is kept efficient irrespective of the ratio between machine to machine communication traffic and other traffic like broadcast or voice.

In one embodiment, control information and user data information are embedded in one physical resource block. Thus, as a benefit of less signaling overhead, the physical resource blocks carrying solely control information are omitted. Physical resource blocks carrying control information and carrying data information are merged to further reduce signaling overhead.

In one embodiment, the control information embedded in the physical resource block containing control information and user data information includes user specific CRC data.

In one embodiment, the control channel being merged into the physical resource block is used as a further pilot signal. This way, regular pilot symbols are omitted and thus the structure of a physical resource block according to the invention is advantageous with regard to machine to machine communication.

In one embodiment, a base station of a wireless transmission system performing the above described methods is proposed. The base station includes a preallocator for preallocating at least one shared channel. The at least one shared channel is preallocated to machine to machine communication by the base station. Further, an assignor for assigning a group of at least one user equipment device to a preallocated shared channel is provided. The base station further includes a scheduler for dynamically allocating radio resources from the at least one preallocated shared channel to a user equipment device of the group of at least one user equipment device for data transmission.

In one embodiment, the base station further includes an encoding means for encoding control information and user data information which are embedded in one physical resource block. In one embodiment, the base station further includes a decoding means for decoding control information and user data information which are embedded in one physical resource block. Thus, in case of machine to machine communication, the base station may encode downlink control information and decode uplink data.

In one embodiment, a user equipment device of a wireless transmission system performing the above described method is proposed. The user equipment device includes a receiving means for receiving information about preallocated shared channels for communication. Further, the user equipment device includes a means for receiving information about the assignment of the user equipment device to a preallocated shared channel. Further, the user equipment device includes a scheduler for receiving and sending information from and to a base station, wherein the information is related to dynamically allocating radio resources from the at least one preallocated shared channel assigned to the user equipment device for data transmission from and to the base station.

In one embodiment, the user equipment device includes an encoding means for encoding control information and user data information which are embedded in one physical resource block. In one embodiment, the user equipment device includes a decoding means for decoding control information and user data information which are embedded in one physical resource block. Thus, in case of machine to machine communication, the user equipment device may decode downlink control information and encode uplink data.

Alternatively radio resources can be assigned by user-specific signaling (RRC signaling or possibly L1/L2 control signaling).

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: shows a machine type communication scenario
- Fig. 2: shows resource allocation in time and frequency domain according to the invention
- Fig. 3: shows a flow diagram for resource allocation according to the invention
- Fig. 4: shows physical resource blocks used by the method for resource allocation according to the invention

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

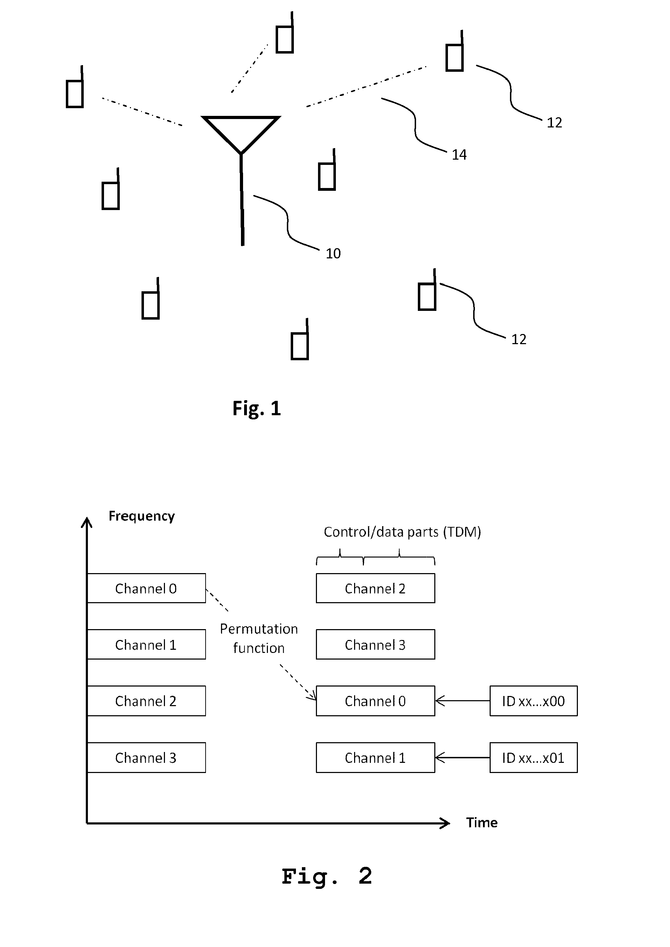

Fig. 1 shows a machine type communication scenario according to a preferred embodiment, comprising a first device, e.g. a base station 10 in a 4G wireless system or a 5G wireless system, and associated user equipment devices 12, e.g. sensor devices or the like. The term user equipment device 12 is to be understood to cover sensor devices in a sensor network, other known user equipment devices like mobile phones, which might transmit and receive data with or without the interaction of a human being and other fixed installed or mobile communication devices able to transmit and receive data. The user equipment devices 12 and the base station 10 are located within the communication range of these devices and communication is performed via a transmission channel 14, which is e.g. a wireless transmission channel. A multi-carrier system is used for communication between the base station 10 and the user equipment devices 12, e.g. an OFDM, SC-FDMA or FBMC system with resource allocation in transmission time intervals and frequency resources.

Fig. 2 shows the inventive method for allocation of radio resources in a multi-carrier transmission system, e.g. LTE. The transmission system, e.g. an OFDM, SC-FDMA, FBMC, etc. system provides multiple transmission channels (Channel1, Channel2, Channel3, Channel4). The channels provide data transmission capability, which is scheduled during time. In a simple example, the channels used for machine to machine communication (MMC) may be defined in the frequency domain by a set of subcarriers, e.g. a single resource block or a few subcarriers. This set of subcarriers is preallocated to machine to machine communication (MMC). At least one of these channels is assigned as a shared channel to a group of at least one user equipment device 12. Grouping of user equipment devices 12 and preallocation of shared channels and assigning the preallocated shared channels to a group of at least one user equipment device 12 may be done according to different criteria. For example, preallocation of shared channels may be done according to system bandwidth, frame format, subframe format, prefix format, quality of service requirement, network load or the like. Grouping may be done according to a Radio Network Temporary Identifier (RNTI). Thus, assignment of the user equipment devices to the corresponding preallocated shared channels depends directly or indirectly on the above mentioned criteria. The criteria may be broadcast when initializing the radio cell, broadcast on a regular basis or the criteria may also be known in advance by the user equipment devices 12. Alternatively, the criteria may be communicated by user specific signaling. If four machine to machine communication (MMC) shared channels are defined, each channel being characterized by a frequency range, e.g. the N=2 least significant bits of the user equipment device ID, e.g. RNTI, may be used for shared channel assignment. The user equipment devices 12 with IDs xx...x00 share channel #0, the user equipment devices 12 with IDs xx...x01 share channel #1, and so on. The number N, the frequency offset, the frequency width of the shared channels corresponding to the number of subcarriers per shared channel, the frequency spacing of the shared channels, the frequency repetition factor of the shared channels for two or more allocations in the same transmission time interval (TTI), time duration and time spacing may be predefined, signaled via cell broadcast, or signaled user-specifically. In one embodiment, in addition, frequency hopping patterns are defined according to a predefined permutation function, in order to benefit from a frequency diversity gain. Shared channels are allocated in time according to the transmission time interval (TTI). Alternatively, other time spacing may be used for allocating shared channels to user equipment devices 12. Sparsity in the time domain reduces battery consumption of the user equipment devices 12 as it reduces blind searches and allows switching off part of the baseband functionalities, e.g. DRX. The resource assignment may have different extends from a very large number of user equipment devices 12 assigned to one preallocated shared channel to the case that a preallocated shared channel may be assigned to a single user equipment device 12. The frequency assignment may be at the center of the carrier, or be on the same carrier with some frequency offset from the center of the carrier, or be on another component carrier. Data transmission in the assignments is realized via transmission of physical resource blocks 42 carrying control information and data information, as depicted in Fig. 4 and described below.

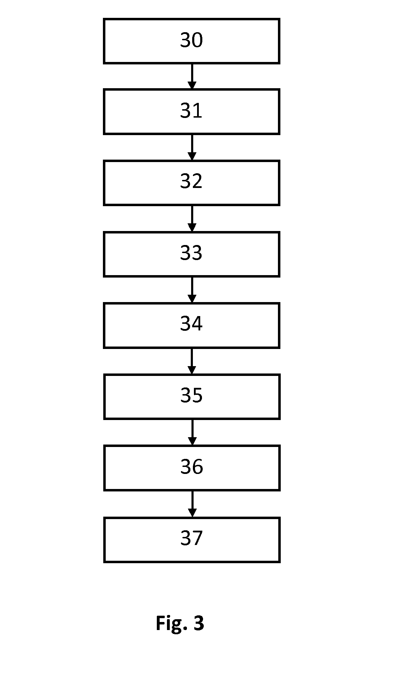

Fig. 3 shows a flow chart of the inventive method performed in a user equipment device 12. When a user equipment device 12, e.g. a device for machine to machine communication (MMC) is added to a cell and is within the communication range of a base station 10, the cell ID is detected in step 30. In step 31, downlink synchronization is performed and in step 32, the system broadcast information is read by the user equipment device 12. In step 33, a random access procedure is triggered, and in step 34, a Radio Network Temporary Identifier (RNTI) information is obtained from the network. After having received this information from the network, the user equipment device 12 informs the network that it is a machine to machine communication (MMC) device in step 35. In one embodiment, quality of service (QoS) parameters are known in the network or the network broadcasts quality of service (QoS) parameters or the network informs the user equipment device about quality of service (QoS) parameters. As an alternative, the user equipment device 12 informs the network also about its quality of service (QoS) requirements in step 35. In a first embodiment, in step 36, the user equipment device 12 receives user-specific signaling informing about preallocation of at least one of multiple shared channels for uplink and/or downlink transmission. Further, the user specific signaling informs the user equipment device 12 that it is assigned to the at least one preallocated shared channel. In one embodiment, in step 36, grouping of the at least one user equipment device and preallocation of shared channels may be done according to a Radio Network Temporary Identifier (RNTI), as described previously. With reference to Fig. 2, if four machine to machine communication (MMC) shared channels are defined, each channel being characterized by a frequency range, e.g. the N=2 least significant bits of the user equipment device ID may be used for assignment to a preallocated shared channel. The user equipment devices 12 with IDs xx...x00 share channel #0, the user equipment devices 12 with IDs xx...x01 share channel #1, and so on. The number N, the frequency width of the shared channels corresponding to the number of subcarriers per shared channel, the frequency spacing of the shared channels and the frequency repetition factor of the shared channels for two or more allocations in the same transmission time interval (TTI) may be predefined, signaled via cell broadcast, or signaled user-specifically. In step 37, if a user equipment device 12 has data to be sent to the base station 10, the preallocated shared channel is assigned to the respective user equipment device 12 by dynamic scheduling. For example, in case of an LTE network, access is granted on PDCCH/PDSCH or PDCCH/PUSCH. This may be done with reduced scheduling grant (DCI) size, as the preallocation of a shared channel leads to reduced efforts during assignment of scheduling grants. Also other parameters like modulation coding schemes, RV parameters, HARQ IDs may be constrained and the size of CRC/RNTI may be reduced at the expense of somewhat reduced performance/flexibility. The search space may also be constrained for battery saving purposes. The preallocation restricts the search space on the control channel as the preallocation defines time-frequency resources where user equipment devices 12 transmit and/or receive control information and data. In one embodiment, to further reduce battery consumption, DRX/paging cycle is used. Thus, the communication means of the user equipment devices 12 are switched off according to a predefined pattern. In another embodiment, a separate control channel, e.g. positioned in the inner xMHz bandwidth, is provided for realizing the random access procedure for dynamic scheduling within the shared channel preallocated to a group of at least one user equipment device 12. Alternatively, the scheduling grants may use the same preallocated radio resources, e.g. a first part of the allocation (TDM as shown in Fig. 2) or a frequency subset of the allocation (FDM).

Fig. 4 shows on the left hand side physical resource blocks (PRB) 40, 41 consisting of control resource elements (first two OFDM symbols) 43 and data resource elements (last twelve OFDM symbols) 44. According to LTE Release 8, user equipment devices 12 receive control information 47 in first physical resource blocks 41 for control information and receive user data information 44 in second physical resource blocks 40 for user data information, the physical resource blocks 40, 41 are widely separated in time and frequency dimensions. A single user equipment device 12 receives data dedicated to this user equipment device 12 in the second physical resource blocks 40 for user data information. Further, this user equipment device 12 receives control information dedicated to this user equipment device 12 in first physical resource blocks 41 for control information. The first physical resource blocks 41 for control information consists of a first set of pilots 46, control resource elements 43 and specific control resource elements 47 allocated to the user equipment device 12. The second physical resource blocks 40 for user data information consists of a second set of pilots 45, control resource elements 43 and data resource elements 44. On the right hand side, a physical resource block 42 according to the invention including resource elements transmitted in the physical resource blocks 41 for control information and the physical resource blocks 40 for user data information according to LTE Release 8 are combined. Thus, the physical resource block 42 according to the invention consists of a third set of pilots 48, which are dedicated to the user equipment device 12, control resource elements 43 and specific control resource elements 47 allocated to the user equipment device 12 and data resource elements 44. Using the first and second physical resource blocks 41, 40 as depicted on the left hand side of Fig. 4, the control information 47 dedicated to a single user equipment device 12 is spread in multiple first physical resource blocks 41 for control information over a significant part of the radio resources dedicated to communication with such user equipment devices 12. In contrast, according to the concept depicted on the right hand side of Fig. 4, all or at least most of the control information 47 dedicated to a single user equipment device 12 is transmitted together with the data information 44 dedicated to this user equipment device 12 in one or few physical resource blocks 42. Thus, the control information 47 for this user equipment device 12 is not spread over the whole radio resources and decoding the control information 47 dedicated to a certain user equipment device 12 does not require scanning the whole radio resources by this user equipment device 12. The radio resources for machine to machine communication (MMC) are preallocated, thus the MMC devices are aware which radio resources are candidates for actual transmission/reception. The actual usage of radio resources for transmission is scheduled dynamically by means of scheduling grants as described above. The scheduling grants enable to select the user, typically by user-specific CRC, to perform link adaptation by adaptive modulation and coding, to perform retransmissions, etc. The needed control information for setting up a downlink or uplink connection between the base station 10 and the user equipment 12 is thus reduced as part of these control information is already known according to the preallocation. As a result, remaining control information requirements are reduced and physical resource blocks 41 for control information and physical resource blocks 40 for user data information are combined to one physical resource block 42 according to the invention, which is especially advantageous in case of transmission of low data requirements as it is the case in machine to machine communication (MMC). In other words, a control channel including user-specific addressing (typically by means of user-specific CRC) is embedded into the time-frequency resources used for actual data transmission. Thus, no resource allocation information is needed in the downlink control information (DCI). In addition, in one embodiment, a machine to machine communication control channel is provided to handle multiple machine to machine communication data channels. As control information needed in the control channel is significantly reduced by the method described above, the control information to be transmitted on the machine to machine communication control channel is reduced, and a simple machine to machine communication data channel identifier could be included into the downlink control information, e.g. two bits for four channels. In total there is a significant lower control overhead compared to full resource allocation as in LTE. In addition, using physical resource blocks 42 including control resource elements and user data resource elements as depicted on the right hand side of Figure 4, the control channel may be used as an additional pilot signal, if CRC is passed. Thus, the pilot overhead is reduced and the channel estimation accuracy for the actual data detection is improved. As the radio resources are preallocated, precoded pilots may be used exclusively.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for allocating radio resources in a multi-carrier transmission system, comprising the steps:
- preallocating (36) at least one of multiple shared channels,
- assigning a group of at least one user equipment device (12) to a preallocated shared channel,
- using (37) dynamic scheduling for allocating radio resources of the preallocated shared channel to a user equipment device (12) of the group of at least one user equipment device for data transmission from and to base station.

2. Method for allocating radio resources in a multi-carrier transmission system according to claim 1, further comprising the steps:
- using user specific RRC signaling for the preallocation of shared channels.

3. Method for allocating radio resources in a multi-carrier transmission system according to claim 1 or 2, further comprising the steps:
- defining the group of at least one user equipment device (12) by using an identifier of the user equipment device (12).

4. Method for allocating radio resources in a multi-carrier transmission system according to claim 3, wherein the identifier of the user equipment devices (12) used for defining a group of at least one user equipment device is the radio network temporary identifier (RNTI).

5. Method for allocating radio resources in a multi-carrier transmission system according to one of claims 1 to 4, wherein defining the group of at least one user equipment device (12) depends on quality of service requirements.

6. Method for allocating radio resources in a multi-carrier transmission system according to one of claims 1 to 5, wherein preallocating at least one of multiple shared channels depends on system bandwidth, frame format, subframe format, prefix format and/or network load.

7. Method for allocating radio resources in a multi-carrier transmission system according to one of claims 1 to 6, wherein information for preallocation of at least one shared channel is broadcast.

8. Method for allocating radio resources in a multi-carrier transmission system according to one of claims 1 to 7, wherein the multi-carrier system is an OFDM, SC-FDMA or FBMC system with resource allocation in transmission time intervals and frequency resources.

9. Method for allocating radio resources in a multi-carrier transmission system according to one of claims 1 to 8, wherein control information and user data information are embedded in one physical resource block (42).

10. Method for allocating radio resources in a multi-carrier transmission system according to claim 9, wherein the control information includes user specific CRC data.

11. Method for allocating radio resources in a multi-carrier transmission system according to claim 8 to 10, wherein the control channel included in the physical resource block (42) is used as further pilot signal.

12. Base station (10) in a wireless transmission system, the base station (10) includes:
- a preallocator for preallocating at least one shared channel,
- an assignor for assigning a group of at least one user equipment device (12) to a preallocated shared channel,
- a scheduler for dynamically allocating radio resources from the at least one preallocated shared channel to a user equipment device of the group of user equipment devices (12) for data transmission.

13. Base station (10) according to claim 12, wherein the base station (10) further includes:
- an encoder and/or decoder for encoding and/or decoding control information and user data information which are embedded in one physical resource block (42).

14. User equipment device (12) in a wireless transmission system, the user equipment device (12) includes:
- a receiver for receiving information about preallocated shared channels for communication,
- a scheduler for receiving and sending information from and to a base station, wherein the information is related to dynamically allocating radio resources from the at least one preallocated shared channel for data transmission from and to the base station (10).

15. User equipment device according to claim 14, wherein the user equipment device further includes:
- an encoder and/or decoder for decoding and/or encoding control information and user data information which are embedded in one physical resource block (42).
